# EUROPÄISCHE PATENTSCHRIFT

(11) **EP 0 611 740 B1**
(45) Veröffentlichungstag und Bekanntmachung des Hinweises auf die Patenterteilung: **11.12.1996**
(21) Anmeldenummer: 94101953.1
(22) Anmeldetag: 09.02.1994
(51) Int. Cl.: C04B 35/66

(54) **Titanhaltiger Zuschlagstoff und dessen Verwendung zur Erhöhung der Haltbarkeit der feuerfesten Ausmauerung eines Ofens**
Titanium-containing aggregate and use thereof for increasing the durability of refractory funace walls
Agrégat contenant du titane et son utilisation dans l'augmentation de la longévité des porois refractaires d'un four

(30) Priorität: 17.02.1993 DE 4304724
(43) Veröffentlichungstag der Anmeldung: 24.08.1994
(73) Patentinhaber: METALLGESELLSCHAFT AKTIENGESELLSCHAFT, 60323 Frankfurt am Main (DE); WE TE GE, PRODUKTIONS- UND HANDELSGESELLSCHAFT, WIENEN & THIEL GmbH, D-45894 Gelsenkirchen-Buer (DE); INTRACON GmbH, D-65195 Wiesbaden (DE)
(72) Erfinder: Amirzadeh-Asl, Djamschid, Dr., D-47445 Moers (DE); Fünders, Dieter, Dr., D-47198 Duisburg (DE); Müller, Hans-Arnold, D-47447 Moers (DE)

(56) Entgegenhaltungen:
- EP-A- 0 201 179
- DE-A- 2 830 920
- DATABASE WPI Week 9122, Derwent Publications Ltd., London, GB; AN 91-162202 A.N.ABYZOV ET AL. & SU-A-1 578 111 (URALS CONS MAT RES) 2. Juni 1986

## Beschreibung

Die vorliegende Erfindung betrifft einen titanhaltigen Zuschlagstoff zur Eingabe in einen Ofen zur Erhöhung der Haltbarkeit der feuerfesten Ausmauerung eines Ofens aus Rückständen der TiO₂-Herstellung sowie dessen Verwendung zur Erhöhung der Haltbarkeit der feuerfesten Ausmauerung eines Ofens.

Als Zuschlagstoff für Öfen, insbesondere Hochöfen, in der Eisen-, Stahl- und Gießerei-Industrie werden größere Mengen natürlichen Ilmenits als Titanträger verwendet. Üblicherweise wird der natürliche Ilmenit in Stücke mit einer Größe von etwa 50 mm zerkleinert und direkt in die Öfen gegeben. Die Zugabe von Ilmenit bewirkt, daß der im Roheisen vorhandene Stickstoffgehalt in Form von Titannitriden oder Titancarbonitriden gebunden wird. Dadurch wird die Entstickung der metallischen Schmelze erreicht. Durch teilweise Ablagerung der so gebildeten Titanverbindungen an den Innenwänden der feuerfesten Ausmauerungen der Öfen, insbesondere im Gestell der Hochöfen, wird die Haltbarkeit der Ausmauerungen erhöht. Natürlicher Ilmenit muß jedoch mit großem Aufwand gewonnen werden, wobei natürliche Ressourcen an hochwertigem Ilmenit verringert werden.

Aus DE 40 18 568 C2 ist ein Verfahren zur Verarbeitung belasteter Rückstände aus der Titandioxidgewinnung bekannt, die einer exothermen Reaktion unterzogen werden, bei der durch Wasserverdampfung ein Trockenprodukt erzeugt wird, wobei für die exotherme Reaktion die belasteten Rückstände aus der Titandioxidgewinnung mit belasteten Rückständen aus der Zinkgewinnung nach dem Jarositverfahren mit Elektrofilterasche und mit Eindampfsalzen CaCl₂·2H₂O/NaCl aus Müllverbrennungsanlagen so gemischt werden, daß das Gemisch durch die exotherme Reaktion auf eine Temperatur zwischen 120 und 180°C erhitzt wird.

Aus DE 21 25 073 B2 ist ein feuerfestes Material für Auskleidungen von Heizaggregaten bekannt, das sowohl gegen hohe Temperaturen als auch gegen geschmolzene sauere Schlacken beständig ist und feuerfeste Zuschlagstoffe, wie Siliciumcarbid, Chromeisenerz oder Siliciumnitrid, im Bereich von 44 bis 85 Gew.-%, Bindemittel auf der Basis von Orthophosphorsäure und mindestens eine titandioxidhaltige Komponente enthält.

Aus DE 39 37 312 A1 ist ein Verfahren zur Herstellung eines Baustoffs, vorzugsweise als sofort-, früh- oder spättragender Begleitdämmbaustoff für den Untertagebau bekannt, wobei belastete Rückstände aus der Titandioxidgewinnung sowie belastete Rückstände aus der Zinkgewinnung nach dem Jarositverfahren mit E-Filteraschen und Eindampfsalzen CaCl₂·2H₂O/NaCl aus den Müllverbrennungsanlagen so gemischt werden, daß eine exotherme Reaktion entsteht.

Aus DE 30 08 251 B1 ist ein feuerfestes Material für im Unterguß zu vergießende Stahlschmelzen, insbesondere Kanal- und Trichterrohrsteine, mit einem Al₂O₃-Gehalt von 20 bis 32 %, einem SiO₂-Gehalt von 60 bis 70 % und einem Gehalt an Begleitoxiden, wie TiO₂, Fe₂O₃ und Na₂O, von < 10 % sowie CaO und MgO bekannt, wobei der Gehalt an CaO und MgO 1,5 bis 10 % beträgt. Dabei soll ein Gußprodukt mit erhöhtem Reinheitsgrad erzeugt werden.

Aus EP 0 201 179 A3 ist ein Verfahren zur Herstellung eines schwarzen keramischen pulverförmigen Stoffes sowie eines daraus erzeugten schwarzen keramischen Körpers bekannt geworden, bei dem Industrieabfälle und/oder natürliche Erze verwendet werden, wobei gegebenenfalls zusätzlich Additive mit einem Gehalt bis zu 0,1 bis 20 Gew.% Titandioxid als Rohstoff eingesetzt werden. Die schwarzen keramischen Pulver werden als Pigment, Füllstoff, wärme- bzw. lichtabsorbierender Stoff oder als wärmeabstrahlender Stoff verwendet. Aus dem schwarzen Pulver können auch keramische Körper hergestellt werden.

Die Aufgabe der vorliegenden Erfindung ist es, auf wirtschaftliche und umweltschonende Weise einen titanhaltigen Zuschlagstoff als Ersatz für den bei metallurgischen Prozessen als Zuschlagstoff verwendeten, natürlichen Ilmenit bereitzustellen und dessen Verwendung zur Erhöhung der Haltbarkeit der feuerfesten Ausmauerung eines Ofens vorzusehen.

Die Aufgabe wird erfindungsgemäß gelöst durch einen titanhaltigen Zuschlagstoff, bestehend aus Rückständen der TiO₂-Herstellung und einem oder mehreren Bestandteilen, ausgewählt aus Kohle, kohlehaltigen Rückständen, Eisen, Eisenoxid, eisen- oder eisenoxidhaltigen Rückständen.

Bei der Herstellung von Titandioxid, insbesondere Titandioxidpigmenten, werden titanhaltige Rohstoffe, wie Ilmenit und Schlacke oder ein Gemisch aus Ilmenit und Schlacke, z.B. nach dem Sulfatverfahren mit Schwefelsäure gelaugt, wobei Titan in Form von Titanylsulfat ausgelaugt wird. Der dabei gebildete unlösliche Rückstand wird über einen Eindicker und Drehfilter abgetrennt und anschließend deponiert. Dieser Rückstand enthält noch 20 bis 65 Gew.-% TiO₂. Auch durch erneute Auslaugung des Rückstandes gelingt es nicht, TiO₂ vollständig auszulaugen, was dazu führt, daß TiO₂ in erheblichen Mengen deponiert werden muß. Erfindungsgemäß können TiO₂-Rückstände auch aus anderen Titandioxidpigment-Herstellungsverfahren, wie z.B. dem Chloridverfahren, verwendet werden.

Ein besonderer Vorteil des erfindungsgemäßen titanhaltigen Zuschlagstoffs ist, daß eisen- und/oder eisenoxidhaltige Rückstände gleichzeitig mit den Rückständen der TiO₂-Herstellung verarbeitet werden können. Bei den eisenoxidhaltigen Rückständen handelt es sich überwiegend um oxidische Rückstände (FeO, Fe₂O₃ oder Fe₃O₄), die in Form von Stäuben, Filterschlämmen oder Filterkuchen anfallen.

In unterschiedlichen Industriebereichen fallen eisen- und eisenoxidhaltige Rückstände an, die trotz hohen Eisengehalts, aufgrund der Zusammensetzung sowie Konsistenz nicht einer direkten Verwertung zugeführt werden können. Ein typisches Produkt ist Abbrand. Abbrand fällt bei der Herstellung von Schwefelsäure durch die Spaltung von Schwefelkies oder Eisensulfat als Rückstand an. Der Eisengehalt in den Abbränden kann zwischen 30 bis 60 % variieren. Ein anderer eisen- und eisenoxidhaltiger Rückstand ist Walzzunder. Beim Walzzunder handelt es sich um die Oxidationsschichten, die beim Walzen und Schmieden von Stahl sowie beim Ziehen von Draht anfallen. Im Walzwerk wird der Walzzunder z.B. durch Wasserstrahl von der gewalzten Metalloberfläche während des Walzens abgefegt. Schließlich fallen eisen- und eisenoxidhaltige Rückstände in allen Bereichen der Eisenherstellung an sowie bei der Produktion von Eisenoxid zur Herstellung von Farbpigmenten.

Ein ganz besonderer Vorteil des erfindungsgemäßen titanhaltigen Zuschlagstoffs ist, daß Kohle und kohlehaltige Rückstände zur Herstellung des titanhaltigen Zuschlagstoffs verwendet werden können. Kohle und kohlehaltige Rückstände dienen als günstige Energieträger.

Eine vorteilhafte Ausgestaltung der Erfindung ist ein titanhaltiger Zuschlagstoff, bestehend aus 5 bis 95 Gew.-% von Rückständen der TiO₂-Herstellung und 5 bis 95 Gew.-% Kohle. Eine besonders vorteilhafte Ausgestaltung der Erfindung ist ein titanhaltiger Zuschlagstoff, bestehend aus 50 bis 95 Gew.-% von Rückständen der TiO₂-Herstellung und 5 bis 50 Gew.-% Kohle.

Eine vorteilhafte Ausgestaltung der Erfindung ist ein titanhaltiger Zuschlagstoff, bestehend aus 10 bis 80 Gew.-% von Rückständen der TiO₂-Herstellung, 5 bis 70 Gew.-% Kohle und 5 bis 40 Gew.-% eisen- und/oder eisenoxidhaltigen Rückständen.

Die Herstellung des titanhaltigen Zuschlagstoffs erfolgt dadurch, daß die Bestandteile in an sich bekannter Weise gemischt und homogenisiert werden.

Bei dem vorstehend erwähnten titanhaltigen Zuschlagstoff handelt es sich erfindungsgemäß um Pulvergemische, die eine Korngröße von 50 bis 5000 µm aufweisen. Die erfindungsgemäßen Gemische können zur Reparatur dünner feuerfester Auskleidungen in Öfen eingetragen werden.

Eine vorteilhafte Ausgestaltung der Erfindung ist ein titanhaltiger Zuschlagstoff in Form von Sinterkörpern.

Die Sinterkörper werden dadurch hergestellt, daß die Bestandteile gemischt werden, das homogene Gemisch in eine Sinterform gegeben wird und anschließend in an sich bekannter Weise gesintert wird. Das Sintergut kann auf die gewünschte Größe gebrochen werden.

Eine weitere Ausgestaltung der Erfindung ist ein titanhaltiger Zuschlagstoff, bestehend aus Rückständen der TiO₂-Herstellung, einem oder mehreren Bindemitteln und einem oder mehreren Bestandteilen, ausgewählt aus Kohle, kohlehaltigen Rückständen, Eisen, Eisenoxid, eisen- oder eisenoxidhaltigen Rückständen als Formkörper in Form von Briketts, Pellets oder Granulaten. Die Formkörper können anschließend bei Temperaturen von 100 bis 1000°C behandelt werden. Der als Brikett ausgebildete Formkörper kann zylinderförmig, rund, oval, quaderförmig oder kubisch sein. Erfindungsgemäß kommen als Bindemittel alle verfügbaren hydraulischen, keramischen und chemischen Bindemittel sowie Quellbinder in Betracht.

Eine vorteilhafte Ausgestaltung der Erfindung ist, daß die Bindemittel Portlandzement, Hochofenzement, Tonerdezement und Elektrofilterasche vorzugsweise aus Kohlekraftwerken sind, die die folgenden Bestandteile enthalten:

| | Portlandzement Gew.-% | Hochofenzement Gew.-% | Tonerdezement Gew.-% |
|---|---|---|---|
| CaO | 62 - 65 | 50 - 55 | 38 - 42 |
| SiO₂ | 16 - 21 | 25 - 30 | 4 - 7 |
| Al₂O₃ | 2 - 6 | 8 - 10 | 48 - 52 |
| TiO₂ | 2 - 6 | 8 - 10 | 48 - 52 |
| Fe₂O₃ | 2 - 4 | 1 - 2 | 0,5 - 1,5 |
| Mn₂O₃ | 0,05 - 0,2 | 0,3 - 0,6 | 0,05 - 0,15 |
| MgO | 1 - 2 | 3 - 4 | 0,5 - 1,5 |

| | Elektrofilterasche Gew.-% |
|---|---|
| SiO₂ | 47 - 53 |
| Al₂O₃ | 26 - 30 |
| Fe₂O₃ | 6 - 8 |
| CaO | 2,4 - 3,0 |
| MgO | 1,9 - 2,5 |
| K₂O | 3,0 - 4,6 |
| Na₂O | 0,6 - 1,1 |

Eine vorteilhafte Ausgestaltung der Erfindung ist ein titanhaltiger Zuschlagstoff in Form von Briketts, Pellets oder Granulaten, bestehend aus 20 bis 90 Gew.-% von Rückständen der TiO₂-Herstellung, 5 bis 70 Gew.-% eisen- und/oder eisenoxidhaltigen Rückständen und 2 bis 30 Gew.-% Bindemitteln.

Eine vorteilhafte Ausgestaltung der Erfindung ist ein titanhaltiger Zuschlagstoff in Form von Briketts, Pellets oder Granulaten, bestehend aus 20 bis 80 Gew.-% von Rückständen der TiO₂-Herstellung, 5 bis 70 Gew.-% Kohle und 2 bis 30 Gew.-% Bindemitteln.

Eine vorteilhafte Ausgestaltung der Erfindung ist ein titanhaltiger Zuschlagstoff in Form von Briketts, Pellets oder Granulaten, bestehend aus 20 bis 80 Gew.-% von Rückständen der TiO₂-Herstellung, 5 bis 50 Gew.-% eisen- und/oder eisenoxidhaltigen Rückständen, 2 bis 50 Gew.-% Kohle und 2 bis 30 Gew.-% Bindemitteln.

Bei der Verarbeitung in Brikettform ist eine maximal zu erreichende homogene Mischung erforderlich, wofür eine Mischzeit von mindestens 3 bis 5 Minuten benötigt wird. Der Wassergehalt beträgt 2 bis 30 Gew.-%. Der Wassergehalt muß so eingestellt werden, daß eine physikalische Verarbeitbarkeit der Mischung möglich ist.

Für die Formkörper ist eine Aushärtezeit (Abbindezeit) von bis zu 14 Tagen erforderlich. Die Aushärtezeit kann durch übliche thermische Behandlung verkürzt werden.

Pellets und Granulate können in an sich bekannter Weise aus dem vorstehend beschriebenen homogenen Gemisch unter den vorstehend beschriebenen Bedingungen hergestellt werden.

Erfindungsgemäß ist vorgesehen, daß der titanhaltige Zuschlagstoff als Pulvergemisch und in Form von Formkörpern zur Eingabe in einen Ofen zur Erhöhung der Haltbarkeit der feuerfesten Ausmauerung eines Ofens verwendet wird. Die erfindungsgemäße Verwendung erfolgt in Öfen insbesondere in der Eisen-, Stahl- und Gießerei-Industrie.

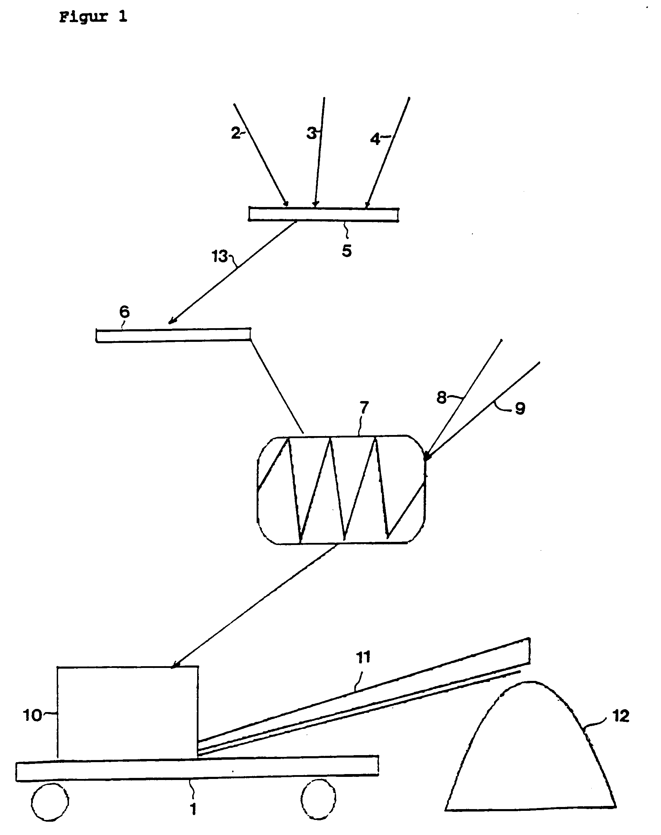

Die Erfindung wird anhand der Figur 1 erläutert.

Figur 1 beschreibt den Ablauf der Herstellung von Briketts, Pellets und Granulaten auf der Basis eines titanhaltigen Zuschlagstoffs aus Rückständen der TiO₂-Herstellung, einem oder mehreren Bindemitteln, ausgewählt aus Hochofenzement, Tonerdezement oder Elektrofilterstaub und einem oder mehreren Bestandteilen, ausgewählt aus Kohle, kohlehaltigen Rückständen, Eisen, Eisenoxid, eisen- oder eisenoxidhaltigen Rückständen, wobei Rückstände der TiO₂-Herstellung (2), eisen- und eisenoxidhaltige Rückstände (3), Kohle und kohlehaltige Rückstände (4) auf ein Sieb (5) gegeben werden. Eine Siebfraktion (13) wird auf ein Förderband mit Waage (6) gegeben. Das Material wird in einen Mischer (7) gegeben. Bindemittel (8) und Wasser (9) werden ebenfalls in den Mischer (7) gegeben. Das homogene Gemisch wird chargenweise in ein Gerät (10) zum Brikettieren, Pelletieren oder Granulieren, das vorzugsweise auf einem fahrbaren Untersatz (1) angebracht ist, gegeben. Die Formkörper werden nach der erforderlichen Abbindezeit über ein Förderband (11) zum Fertiggutlager (12) transportiert.

Bei dem mobilen Untersatz (1) handelt es sich um einen Lastwagen oder einen Lastwagenanhänger. Diese erfindungsgemäße Vorrichtung ermöglicht es, anfallende kohlehaltige Rückstände und anfallende eisen- und eisenoxidhaltige Rückstände, die sonst deponiert werden müßten, an Ort und Stelle zu verwerten. Der besondere Vorteil liegt darin, daß die erfindungsgemäßen Formkörper in der Eisen-, Stahl- und Gießerei-Industrie direkt an Ort und Stelle hergestellt und in die Öfen eingegeben werden können.

Die Erfindung wird anhand der Beispiele erläutert.

### BEISPIELE

Zur Bestimmung der Bruchfestigkeit (Punktfestigkeit) wurden die Formkörper in einer Prüfpresse einer kontinuierlich zunehmenden auf sie einwirkenden Kraft bis zum Bruch ausgesetzt. Die beim Brechen auf die Briketts einwirkende Kraft gilt als das Maß für deren Bruchfestigkeit.

### Beispiel 1

In einen Mischer wurden 50 Gew.-% Aufschlußrückstand aus der TiO₂-Pigment-Herstellung nach dem Sulfatverfahren, enthaltend 51 Gew.-% TiO₂, 23 Gew.-% SiO₂, 5 Gew.-% Al₂O₃, 6 Gew.-% CaO, 5 Gew.-% Fe₂O₃ und 30 Gew.-% Walzzunder, enthaltend 67 Gew.-% Fe₂O₃, 2 Gew.-% SiO₂, 2 Gew.-% CaO und 2 Gew.-% C, gegeben. Dann wurden unter Rühren 13 Gew.-% Hochofenzement, enthaltend 51 Gew.-% CaO, 27 Gew.-% SiO₂, 4,5 Gew.-% Al₂O₃, 4,5 Gew.-% TiO₂, 1,5 Gew.-% Fe₂O₃, 0,5 Gew.-% Mn₂O₃ und 3,5 Gew.-% MgO; 1,5 Gew.-% Elektrofilterasche, enthaltend 50 Gew.-% SiO₂, 28 Gew.-% Al₂O₃, 7 Gew.-% Fe₂O₃, 3,2 Gew.-% CaO, 2,2 Gew.-% MgO, 3,8 Gew.-% K₂O und 0,9 Gew.-% Na₂O, sowie 5,5 Gew.-% Tonerdezement, enthaltend 40 Gew.-% CaO, 6,5 Gew.-% SiO₂, 25 Gew.-% Al₂O₃, 25 Gew.-% TiO₂, 1,0 Gew.-% Fe₂O₃, 0,1 Gew.-% Mn₂O₃ und 1,0 Gew.-% MgO, dazugegeben und das Gemisch 5 Minuten innig gemischt. Dann wurden 0,5 l Wasser zu dem Gemisch gegeben und das Gemisch 2 Minuten homogenisiert. Das homogene Gemisch wurde auf eine Brikettpresse gegeben. In der Brikettpresse wurde ein Druck von 120 bar angewendet, wobei zylinderförmige Formkörper (Briketts) mit einem Außendurchmesser von 80 mm und einer Länge von 40 mm erhalten wurden. Nach einer Abbindezeit von 14 Tagen wiesen die erhaltenen Formkörper eine Bruchfestigkeit von 2800 N und eine Bruchfestigkeit nach eineinhalbstündigem Erhitzen auf 1000°C in 100 %iger CO-Atmosphäre von 3000 N auf. Die zylinderförmigen Formkörper (Briketts) enthielten:
25,0 Gew.-% TiO₂, 23,0 Gew.-% Fe₂O₃, 16,6 Gew.-% SiO₂, 6,5 Gew.-% Al₂O₃, 12,4 Gew.-% CaO, 0,5 Gew.-% C, 0,1 Gew.-% Na und 0,07 Gew.-% K.

### Beispiel 2

Es wurden zylinderförmige Formkörper (Briketts), wie im Beispiel 1 beschrieben, hergestellt, wobei 60 Gew.-% Aufschlußrückstand aus der TiO₂-Pigment-Herstellung nach dem Sulfatverfahren (Zusammensetzung wie in Beispiel 1), 30 Gew.-% Walzzunder und 10 Gew.-% Hochofenzement (Zusammensetzung wie in Beispiel 1) verwendet wurden. Die zylinderförmigen Formkörper wiesen einen Außendurchmesser von 80 mm und eine Länge von 40 mm auf. Die zylinderförmigen Formkörper zeigten nach einer Abbindezeit von 14 Tagen eine Bruchfestigkeit von 3500 N und eine Bruchfestigkeit nach eineinhalbstündigem Erhitzen auf 1000°C in 100 %iger CO-Atmosphäre von 3700 N. Die zylinderförmigen Formkörper enthielten:
29,5 Gew.-% TiO₂, 22,0 Gew.-% Fe₂O₃, 15,0 Gew.-% SiO₂, 7,0 Gew.-% Al₂O₃, 10,3 Gew.-% CaO, 2,8 Gew.-% C, 0,1 Gew.-% Na und 0,08 Gew.-% K.

### Beispiel 3

Zylinderförmige Formkörper (Briketts) werden, wie in Beispiel 1 beschrieben, hergestellt, wobei 50 Gew.-% Aufschlußrückstand aus der TiO₂-Pigment-Herstellung nach dem Sulfatverfahren (Zusammensetzung wie in Beispiel 1), 25 Gew.-% Walzzunder (Zusammensetzung wie in Beispiel 1) und 10 Gew.-% Spaltabbrand (enthaltend 72 Gew.-% Fe₂O₃, 6 Gew.-% TiO₂, 7 Gew.-% SiO₂, 3 Gew.-% Al₂O₃ und 2 Gew.-% CaO) und 10,5 Gew.-% Hochofenzement (Zusammensetzung wie in Beispiel 1), 3,5 Gew.-% Tonerdezement (Zusammensetzung wie in Beispiel 1) und 1 Gew.-% Elektrofilterasche (Zusammensetzung wie in Beispiel 1) verwendet werden. Die zylinderförmigen Formkörper wiesen einen Außendurchmesser von 80 mm und eine Länge von 40 mm auf. Nach einer Abbindezeit von 14 Tagen wiesen die zylinderförmigen Formkörper eine Bruchfestigkeit von 3400 N und eine Bruchfestigkeit nach eineinhalbstündigem Erhitzen auf 1000°C in einer 100 %igen CO-Atmosphäre von 4050 N auf. Die zylinderförmigen Formkörper enthielten:
25,0 Gew.-% TiO₂, 27,0 Gew.-% Fe₂O₃, 16,0 Gew.-% SiO₂, 6,0 Gew.-% Al₂O₃, 10,0 Gew.-% CaO, 3,3 Gew.-% C, 0,12 Gew.-% Na und 0,1 Gew.-% K.

### Beispiel 4

50 Gew.-% Aufschlußrückstand aus der TiO₂-Pigment-Herstellung nach dem Sulfatverfahren wurden mit 50 Gew.-% Kohle innig vermischt. Es entstand ein pulverförmiges Produkt mit einer mittleren Korngröße von < 2 mm. Das Gemisch enthielt:
23,0 Gew.-% TiO₂, 2,5 Gew.-% Fe₂O₃, 10,0 Gew.-% SiO₂, 2,0 Gew.-% Al₂O₃, 3,3 Gew.-% CaO, 49,0 Gew.-% C, 0,12 Gew.-% Na und 0,1 Gew.-% K.

### Beispiel 5

40 Gew.-% Aufschlußrückstand aus der TiO₂-Pigment-Herstellung nach dem Sulfatverfahren (Zusammensetzung wie in Beispiel 1) wurden mit 20 Gew.-% Spaltabbrand (Zusammensetzung wie in Beispiel 3) 5 Minuten gemischt. Das Gemisch wurde mit 40 Gew.-% Kohle 2 Minuten homogenisiert. Das erhaltene pulverförmige homogene Gemisch wies eine mittlere Korngröße von < 2 mm auf. Das Gemisch enthielt:
19,0 Gew.-% TiO₂, 16,5 Gew.-% Fe₂O₃, 9,5 Gew.-% SiO₂, 2,6 Gew.-% Al₂O₃, 3,2 Gew.-% CaO, 43,0 Gew.-% C, 0,1 Gew.-% Na und 0,08 Gew.-% K.

## Patentansprüche

1. Titanhaltiger Zuschlagstoff zur Eingabe in einen Ofen zur Erhöhung der Haltbarkeit der feuerfesten Ausmauerung eines Ofens, bestehend aus Rückständen der TiO₂-Herstellung und einem oder mehreren Bestandteilen, ausgewählt aus Kohle, kohlehaltigen Rückständen, Eisen, Eisenoxid, eisen- oder eisenoxidhaltigen Rückständen.

2. Titanhaltiger Zuschlagstoff nach Anspruch 1, bestehend aus 5 bis 95 Gew.-% von Rückständen der TiO₂-Herstellung und 5 bis 95 Gew.-% Kohle.

3. Titanhaltiger Zuschlagstoff nach Anspruch 1, bestehend aus 10 bis 80 Gew.-% von Rückständen der TiO₂-Herstellung, 5 bis 70 Gew.-% Kohle und 5 bis 40 Gew.-% eisen- und/oder eisenoxidhaltigen Rückständen.

4. Titanhaltiger Zuschlagstoff nach den Ansprüchen 1 bis 3, in Form von Sinterkörpern.

5. Titanhaltiger Zuschlagstoff zur Eingabe in einen Ofen zur Erhöhung der Haltbarkeit der feuerfesten Ausmauerung eines Ofens, bestehend aus Rückständen der TiO₂-Herstellung, einem oder mehreren Bindemitteln und einem oder mehreren Bestandteilen, ausgewählt aus Kohle, kohlehaltigen Rückständen, Eisen, Eisenoxid, eisen- oder eisenoxidhaltigen Rückständen in Form von Briketts, Pellets oder Granulaten.

6. Titanhaltiger Zuschlagstoff nach Anspruch 5, wobei die Bindemittel Portlandzement, Hochofenzement, Tonerdezement oder Elektrofilterasche sind.

7. Titanhaltiger Zuschlagstoff nach Anspruch 5, bestehend aus 20 bis 90 Gew.-% von Rückständen der TiO₂-Herstellung, 5 bis 70 Gew.-% eisen- und/oder eisenoxidhaltigen Rückständen und 2 bis 30 Gew.-% Bindemitteln.

8. Titanhaltiger Zuschlagstoff nach Anspruch 5, bestehend aus 20 bis 80 Gew.-% von Rückständen der TiO₂-Herstellung, 5 bis 70 Gew.-% Kohle und 2 bis 30 Gew.-% Bindemitteln.

9. Titanhaltiger Zuschlagstoff nach Anspruch 5, bestehend aus 20 bis 80 Gew.-% von Rückständen der TiO₂-Herstellung, 5 bis 50 Gew.-% eisen- und/oder eisenoxidhaltigen Rückständen, 2 bis 50 Gew.-% Kohle und 2 bis 30 Gew.-% Bindemitteln.

10. Verwendung eines titanhaltigen Zuschlagstoffs gemäß den Ansprüchen 1 bis 9 zur Erhöhung der Haltbarkeit der feuerfesten Ausmauerung eines Ofens.

## Claims

1. A titanium-containing aggregate for charging into a furnace in order to increase the durability of the refractory lining of a furnace, consisting of residues from TiO₂ production and one or more constituents selected from carbon, carbon-containing residues, iron, iron oxide or residues containing iron or iron oxide.

2. A titanium-containing aggregate according to Claim 1, consisting of 5 to 95% by weight residues from TiO₂ production and 5 to 95% by weight carbon.

3. A titanium-containing aggregate according to Claim 1, consisting of 10 to 80% by weight of residues from TiO₂ production, 5 to 70% by weight carbon and 5 to 40% by weight residues containing iron and/or iron oxide.

4. A titanium-containing aggregate according to Claims 1 to 3, in the form of sintered compacts.

5. A titanium-containing aggregate for charging into a furnace in order to increase the durability of the refractory lining of a furnace, consisting of residues from TiO₂ production, one or more binders and one or more constituents selected from carbon, carbon-containing residues, iron, iron oxide or residues containing iron or iron oxide, in the form of briquettes, pellets or granules.

6. A titanium-containing aggregate according to Claim 5, wherein the binders are Portland cement, blast-furnace cement, aluminous cement or ash from electrostatic precipitators.

7. A titanium-containing aggregate according to Claim 5, consisting of 20 to 90% by weight of residues from TiO₂ production, 5 to 70% by weight residues containing iron and/or iron oxide and 2 to 30% by weight binders.

8. A titanium-containing aggregate according to Claim 5, consisting of 20 to 80% by weight residues from TiO₂ production, 5 to 70% by weight carbon and 2 to 30% by weight binders.

9. A titanium-containing aggregate according to Claim 5, consisting of 20 to 80% by weight of residues from TiO₂ production, 5 to 50% by weight residues containing iron and/or iron oxide, 2 to 50% by weight carbon and 2 to 30% by weight binders.

10. The use of a titanium-containing aggregate according to Claims 1 to 9 in order to increase the durability of the refractory lining of a furnace.

## Revendications

1. Agrégat contenant du titane et destiné à être chargé dans un four pour augmenter la durabilité de la maçonnerie réfractaire d'un four, constitué de résidus de la fabrication de TiO₂ et d'un ou plusieurs constituants choisis parmi le charbon, des résidus contenant du charbon, du fer, de l'oxyde de fer, des résidus contenant du fer ou contenant de l'oxyde de fer.

2. Agrégat contentant du titane suivant la revendication 1, constitué de 5 à 95 % en poids de résidus de la préparation de TiO₂ et de 5 à 95 % en poids de charbon.

3. Agrégat contenant du titane suivant la revendication 1, constitué de 10 à 80 % en poids de résidus de la préparation de TiO_{2,} de 5 à 70 % en poids de charbon et de 5 à 40 % en poids de résidus contenant du fer et/ou de l'oxyde de fer.

4. Agrégat contenant du titane suivant l'une des revendications 1 à 3, sous la forme de corps frittés.

5. Agrégat contenant du titane destiné à être chargé dans un four pour augmenter la durabilité de la maçonnerie réfractaire d'un four, constitué de résidus de la préparation de TiO₂, d'un ou plusieurs liants et d'un ou plusieurs constituants choisis parmi le charbon, les résidus contenant du charbon, le fer, l'oxyde de fer, les résidus contenant du fer ou les résidus contenant de l'oxyde de fer sous la forme de briquettes, de boulettes ou de granulés.

6. Agrégat contenant du titane suivant la revendication 5, dans lequel le liant est du ciment de Portland, du ciment de hauts fourneaux, du ciment d'alumine ou de la cendre d'électrofiltre.

7. Agrégat contenant du titane suivant la revendication 5, constitué de 20 à 90 % en poids de résidus de la préparation de TiO₂, de 5 à 70 % en poids de résidus contenant du fer et/ou de l'oxyde de fer et de 2 à 30 % en poids de liants.

8. Agrégat contenant du titane suivant la revendication 5, constitué de 20 à 80 % en poids de résidus de la préparation de TiO₂, de 5 à 70 % en poids de charbon et de 2 à 30 % en poids de liants.

9. Agrégat contenant du titane suivant la revendication 5, constitué de 20 à 80 % en poids de résidus de la préparation de TiO₂, de 5 à 50 % en poids de résidus contenant du fer et/ou de l'oxyde de fer, de 2 à 50 % en poids de charbon et de 2 à 30 % en poids de liants.

10. Utilisation d'un agrégat contenant du titane suivant les revendications 1 à 9 pour augmenter la durabilité de la maçonnerie réfractaire d'un four.
